# EUROPÄISCHE PATENTSCHRIFT

(11) **EP 2 766 596 B1**
(45) Veröffentlichungstag und Bekanntmachung des Hinweises auf die Patenterteilung: **30.12.2015**
(21) Anmeldenummer: 12805752.8
(22) Anmeldetag: 15.10.2012
(51) Int. Cl.: F02P 13/00, F02F 1/24, F02B 19/10, F02B 23/06, F02B 23/08, F23Q 7/00, H01T 13/52

(54) **BRENNRAUM EINES VERBRENNUNGSMOTORS, VERFAHREN ZUR ZÜNDUNG EINES KRAFTSTOFF-LUFT- GEMISCHES UND VERBRENNUNGSMOTOR**
COMBUSTION CHAMBER OF AN INTERNAL COMBUSTION CHAMBER, METHOD FOR IGNITING A FUEL-AIR MIXTURE AND INTERNAL COMBUSTION CHAMBER
CHAMBRE DE COMBUSTION D'UN MOTEUR À COMBUSTION INTERNE, PROCÉDÉ D'ALLUMAGE D'UN MÉLANGE CARBURANT-AIR , ET MOTEUR À COMBUSTION INTERNE ASSOCIÉ

(30) Priorität: 14.10.2011 DE 102011116371
(43) Veröffentlichungstag der Anmeldung: 20.08.2014
(73) Patentinhaber: Borissovskiy, Vladimir, 04103 Leipzig (DE)
(72) Erfinder: Borissovskiy, Vladimir, 04103 Leipzig (DE)
(74) Vertreter: Hecht, Jan-David
(86) Internationale Anmeldenummer: PCT/IB2012/002232
(87) Internationale Veröffentlichungsnummer: WO 2013/054187

(56) Entgegenhaltungen:
- EP-A2- 2 025 927
- WO-A1-2005/080788
- CA-A1- 2 157 413
- DE-A1- 3 509 381
- DE-A1-102004 039 818
- DE-A1-102009 026 574

## Beschreibung

Die vorliegende Erfindung betrifft einen Brennraum für Verbrennungsmotoren nach dem Oberbegriff von Anspruch 1, ein Verfahren zur Zündung eines Kraftstoff-Luft-Gemisches in einem Brennraum nach dem Oberbegriff von Anspruch 14 und einen Verbrennungsmotor nach dem Oberbegriff von Anspruch 15.

### Gebiet der Technik

Die Erfindung gewährleistet eine effektivere Umwandlung der kinetischen Energie der Moleküle des Kraftstoffes in Nutzarbeit, d. h. eine Leistungs- und Wirkungsgradsteigerung des Verbrennungsmotors.

### Stand der Technik

Bekannt ist der Brennraum eines Verbrennungsmotors, der durch die Zylinderwände, den Zylinderkopf und den Kolbenboden gebildet wird (Orlin A. S., Alekseew W. P., Kostygow N. I. und andere. Verbrennungsmotoren. Aufbau und Funktionsweise von Kolbenmotoren und kombinierten Motoren. M.: Maschinostrojenie 1970, S. 103).

Der Nachteil der genannten Motorbauweise besteht in der Gestaltung des Brennraumes in Zylinderform sowie im Nichtvorhandensein der erforderlichen Varianten für das Zünden des Kraftstoff-Luft-Gemisches, deshalb ist die Erhöhung der Motorleistung und die Verbesserung des Wirkungsgrades ohne eine Vergrößerung der Abmessungen und der Masse des Motors nicht möglich.

Bekannt ist der Brennraum eines Verbrennungsmotors, der aus einer Vertiefung im Kolbenboden oder im Zylinderkopf besteht und der eine rechtwinklige oder keilförmige Gestalt besitzt (Chatschijan A. S., Morosow K. A., Lukanin W. N. und andere. Verbrennungsmotoren. M.: Wysschaja schkola, 1985, S. 48 und 76).

Die rechtwinklige oder keilförmige Gestalt des Brennraumes sowie das Fehlen der erforderlichen Varianten für das Zünden des Kraftstoff-Luft-Gemisches gestatten es nicht, die kinetischen Energie der Moleküle des Kraftstoffes effektiv in Nutzarbeit umzuwandeln und eine Leistungssteigerung des Motors und eine Verbesserung von dessen Wirkungsgrad zu erzielen.

Bekannt ist der Brennraum eines Kolbenmotors, der durch Vertiefungen im Kolbenboden sowie im Zylinderkopf gestaltet ist und der eine zylindrische Form besitzt (Urheberschein der UdSSR Nr. 337547, Kl. F 02 B 23/08, 1972.

Der mit einem zylinderförmigen Brennraum, aber nicht mit den erforderlichen Zündvarianten für das Kraftstoff-Luft-Gemisch ausgestattete Kolbenmotor hat eine geringe Leistung und einen niedrigen Wirkungsgrad infolge der uneffektiven Umwandlung der kinetischen Energie der Moleküle des Kraftstoffes in Nutzarbeit.

Bekannt ist der Brennraum eines Verbrennungsmotors, der durch Vertiefungen im Zylinderkopf sowie im Kolbenboden gebildet wird und der ein Ventil mit Erhöhung besitzt, das in die Vertiefung des Kolbenbodens hineinragt (Patent DE 3145073, Class F 02 B 45/10, 1983).

Eine solche Brennraumkonstruktion und das Nichtvorhandensein der erforderlichen Zündvarianten für das Kraftstoff-Luft-Gemisch gestatten keine effektive Umwandlung der kinetischen Energie der Moleküle des Kraftstoffes in Nutzarbeit sowie keine Leistungssteigerung des Motors und auch keine Erhöhung seines Wirkungsgrades.

Bekannt ist der Brennraum eines Verbrennungsmotors, der durch eine glatte Oberfläche des Zylinderkopfes und durch zylindrische Vertiefungen im Kolbenboden gebildet wird (DE 3545440 A1, Class F 02 B 17/00, 1987).

Die zylindrische Form des Brennraumes der bekannten Verbrennungsmotoren erlaubt keine Leistungssteigerung des Motors und keine Erhöhung seines Wirkungsgrades.

Bekannt sind Varianten von Kolbenmotor-Brennräumen, deren Ausführung in einer ebenen Kolbenbodenfläche und in mindestens einer Vertiefung im Zylinderkopf oder in einem ebenen Zylinderkopf und in mindestens einer Vertiefung in der ebenen Kolbenbodenfläche, oder in mindestens zwei Vertiefungen mit je einer im Zylinderkopf und in mindestens einer in der Kolbenbodenfläche oder in einer Vertiefung in der Kolbenbodenfläche und in mindestens einer Vertiefung in der Fläche des Zylinderkopfes besteht. Die Vertiefungen besitzen die Form einer Pyramide, eines Pyramidenstumpfes, eines Kegels oder Kegelstumpfes, einer Halbkugel, eines Halbkugelsegments, eines Paraboloides oder einer Stufe im Längsschnitt des Brennraumes oder die Form einer spiralförmigen oder ringförmigen Nut im Querschnitt des Brennraumes (Patent der Russischen Föderation Nr. 2249718, Kl. F 02 F1/21, F 02 F3/28, F 02 B23/00, 2005).

Die Mehrzahl dieser Anwendungsvarianten beim Verbrennungsmotor kann keine effektive Umwandlung der kinetischen Energie der Moleküle des Kraftstoffes in Nutzarbeit gewährleisten. Der Nachteil der besten dieser Brennraum-Varianten besteht im Fehlen der erforderlichen Entzündungsvarianten für das Kraftstoff-Luft-Gemisch, wodurch keine maximal effektive Umwandlung der kinetischen Energie der Moleküle des Kraftstoffes in Nutzarbeit, keine Leistungssteigerung des Motors und auch keine Erhöhung seines Wirkungsgrades möglich sind.

Bekannt ist eine Laser-Zündeinrichtung (IPC8 Class: AFO2B1900FI, Publication date: 03/17/2011, Patent application number: 20110061623).

Die Anwendung einer Laser-Zündeinrichtung nicht in Kombination mit einem besonders gestalteten Brennraum gestattet keine effektive Steigerung der Leistung der Maschine und ihres Wirkungsgrades.

Wenn in einem Gefäß N Gasmoleküle vorhanden sind, so wird sich bekanntlich zu jedem beliebigen Zeitpunkt ein N/3 Molekül längs zu jeder Bewegungsrichtung bewegen, wobei sich die eine Hälfte von ihnen (d. h. N/6 Moleküle) längs zur gegebenen Bewegungsrichtung in einer Richtung und die andere Hälfte in der anderen Richtung bewegen wird (Saweljew I. W. Kurs der allgemeinen Physik in 4 Bänden, Band 1, Seite 363. Moskau, "Knorus" 2009).

Dies trifft auch auf diejenigen Gase zu, die sich im Ergebnis der Verbrennung des Kraftstoff-Luft-Gemisches im Brennraum bilden.

Bei der Anwendung von traditionellen Brennräumen, die aus Zylinderwänden sowie aus der Kolbenboden- und der Zylinderkopffläche gebildet werden, wird der größte Anteil der Energie der sich ausdehnenden Gase demzufolge nicht wirksam genutzt, da die Nutzarbeit nur von denjenigen Molekülen des Kraftstoffes (der Verbrennungsprodukte) erbracht wird, die auf die Oberfläche des Kolbenbodens wirken. Dabei wird die Nutzarbeit nur von denjenigen Molekülen erbracht, die senkrecht auf die ebene Kolbenbodenfläche wirken.

Die auf die Zylinderwände senkrecht wirkenden Gasmoleküle haben überhaupt keinen Arbeitsanteil an der Bewegung des Kolbens in Richtung unterer Totpunkt.

Da ein bedeutender Teil der Gasmoleküle seine Wirkung an die Zylinderwände abgibt, wird die kinetische Energie dieser Moleküle nicht effektiv genutzt, und die von diesen Molekülen geleistete Nutzarbeit ist sehr gering, und dies hat einen geringen Wirkungsgrad sowie eine ungenügende Leistung des Verbrennungsmotors zur Folge.

### Offenlegung (Beschreibung) der Erfindung

Die Aufgabe der Erfindung besteht darin, einen Brennraum anzugeben, mit dem eine effizientere Verbrennung ermöglicht wird. Insbesondere sollen einige Varianten eines speziell gestalteten Brennraumes des Verbrennungsmotors angegeben werden, bei denen verschiedene besondere Zündverfahren für das Kraftstoff-Luft-Gemisch zum Einsatz kommen, durch die die erforderliche Energieumverteilung zwischen den Freiheitsgraden der Moleküle des Kraftstoffes gewährleistet wird. Weiterhin sollen auch ein Verfahren zur Zündung eines Kraftstoff-Luft-Gemisches in einem Brennraum und Verbrennungsmotoren angegeben werden.

Diese Aufgabe wird gelöst mit einem Brennraum eines Verbrennungsmotors nach Anspruch 1, einem Verfahren zur Zündung eines Kraftstoff-Luft-Gemisches in einem Brennraum nach Anspruch 14 und einem Verbrennungsmotor nach Anspruch 15. Vorteilhafte Weiterbildungen sind in den abhängigen Unteransprüchen angegeben.

Die Erfindung ermöglicht eine wesentliche Verbesserung der von den Molekülen des Kraftstoffes verrichteten Nutzarbeit und demzufolge eine Erhöhung des Wirkungsgrades des Motors.

Der bei der Anwendung der empfohlenen Erfindung durch die Vorsehung der Vertiefung und der besonderen Zündeinrichtung erzielte technische Effekt besteht in einer derartigen Energieumverteilung zwischen den Freiheitsgraden der Moleküle des Kraftstoffes, bei der die maximale Energie auf denjenigen Freiheitsgrad entfällt, der mit der Vorwärtsbewegung der Moleküle in Längsrichtung zur Bewegungsachse des Kolbens einhergeht (oder mit anderen Worten, es erfolgt eine äquivalente Verringerung der Anzahl der Freiheitsgrade der Moleküle des Kraftstoffes), und demzufolge entsteht keine chaotische, sondern eine zielgerichtete Bewegung der Moleküle des Kraftstoffes in Richtung Kolben, dadurch werden die Bedingungen für die Entstehung, Aufrechterhaltung und die mehrfache Reflexion von mindestens einer Schlagwelle innerhalb eines Taktes, deren Bewegung im Arbeitszylinder längs der Bewegungsachse des Kolbens erfolgt, geschaffen. Dies führt zu einer effektiveren Umwandlung der kinetischen Energie der Moleküle des Kraftstoffes in Nutzarbeit, d. h. zu einer Erhöhung des Wirkungsgrades des Verbrennungsmotors.

Wesentlich ist bei der vorliegenden Erfindung, dass die Zündeinrichtung längs zur Brennraumachse angeordnet ist und angepasst ist, eine lineare Zündung längs zur Brennraumachse zu erzeugen. Dadurch stellen sich im Zusammenhang mit der erfindungsgemäß vorgesehenen Vertiefung die besonderen Vorteile ein. Die Anordnung längs zur Brennraumachse schließt ein Liegen auf der Brennraumachse ein, aber auch Anordnungen parallel zur Brennraumachse.

Erst dadurch wird nämlich eine solche Energieumverteilung zwischen den Freiheitsgraden der Moleküle des Kraftstoffes gewährleistet, dass die von den Molekülen des Kraftstoffes verrichtete Nutzarbeit und demzufolge der Wirkungsgrad des Motors wesentlich erhöht werden können. Genauer gesagt wird ein kombinatorischer Effekt durch die besondere Brennraumgeometrie mit der Vertiefung im Zusammenwirken mit der speziellen Zündeinrichtung bewirkt. Dabei wird erreicht, dass eine derartige Energieumverteilung zwischen den Freiheitsgraden der Moleküle des Kraftstoffes bewirkt wird, dass die maximale Energie auf denjenigen Freiheitsgrad entfällt, der mit der Vorwärtsbewegung der Moleküle in die Längsrichtung zur Bewegungsachse des Kolbens einhergeht. Es besteht also keine chaotische, sondern eine zielgerichtete Bewegung der Moleküle des Kraftstoffes in Richtung Kolben, wodurch die Bedingungen geschaffen werden für die Entstehung, Aufrechterhaltung und mehrfache Reflektion von mindestens einer Schlagwelle innerhalb eines Taktes, deren Bewegung im Arbeitszylinder längs der Bewegungsachse des Kolbens erfolgt.

Genauer gesagt, ermöglicht die Brennraumgeometrie ein Hin- und Herpendeln der Schlagwelle entlang der Längsachse des Brennraumes, wobei die besondere Geometrie der Vertiefung die Umlenkung des Zündimpulses von einer radialen Richtung in Längsrichtung der Brennraumachse bewirkt. Solche Brennraumgeometrien waren zwar schon aus der WO 2004/059144 A1 bekannt, allerdings nicht die Kombination mit der besondern Zündeinrichtung.

Bisher waren zwar auch schon verschiedene Zündeinrichtungen bekann, diese bewirkten jedoch stets eine punktuelle Zündung, so dass sich ein kugelförmiger Zündimpuls ausbildete. Von diesem kugelförmigen Zündimpuls werden naturgemäß nur einzelne Raumwinkelabschnitte durch die Vertiefung in Richtung der Längsachse des Brennraumes umgelenkt, während große Raumwinkelbereiche überhaupt keinen Impuls in Längsrichtung beitragen.

Dies wird mit der vorliegenden Erfindung dadurch verbessert, dass nunmehr die Zündeinrichtung angepasst ist, eine lineare Zündung längs der Brennraumachse zu erzeugen. Anstelle einer punktförmigen Zündung entsteht hierbei nämlich kein kugelförmiger Zündimpuls, der von einem Zentrum ausgeht, sondern es entsteht ein zylinderförmiger Zündimpuls, bei dem im Wesentlichen nur radiale Impulsbestandteile in Bezug auf die Brennraumlängsachse vorliegen. Diese radialen Impulsbestandteile können nun in ihre Gesamtheit mittels der Vertiefung in Längsrichtung zur Brennraumachse und damit zu Bewegungsachse ausgerichtet werden.

Während also bei einer punktuellen Zündung nur einzelne Raumwinkelbereiche des Zündimpulses durch die Vertiefung in Längsrichtung zur Bewegungsachse ausgerichtet werden können, betrifft dies bei der erfindungsgemäß verwendeten linearen Zündung im wesentlichen den vollständigen Zündimpuls, da dieser im wesentlichen nur aus radial wirkenden Impulsen und (wenn man die Deckfläche des Zylinderimpulses betrachtet) in Längsrichtung der Bewegungsachse wirkenden Zündimpulsen besteht.

Durch die erfindungsgemäße Verwendung einer linearen Zündung in Längsrichtung zur Brennraumachse kann also in Verbindung mit der Vertiefung der Wirkungsgrad des Motors bedeutend erhöht.

Zur Umsetzung dieser erfindungsgemäßen Lehre wird der Fachmann geeignete Zündeinrichtungen auswählen. Beispielsweise kann er eine Laser-Zündkerze verwenden, die keine spezielle Fokussierung aufweisen, sondern über einen gewissen Längsbereich des Brennraums gleichzeitig zündet. Oder auch andere bekannt Zündeinrichtung, wie Glühkerzen und Funkenzündkerzen, die aufgrund ihrer Ausdehnung eine solche lineare Zündung längs zur Brennraumachse erzeugen können. Beispielsweise könnte eine mehr oder weniger lang erstreckte Glühkerze verwendet werden.

Besonders bevorzugt ist die Zündeinrichtung angepasst, im Wesentlichen über die gesamte Brennraumachse gleichzeitig eine Zündung vorzunehmen. "Gesamte Brennraumachse" meint hier die lichte Höhe zwischen Kolbenoberfläche und Zylinderkopffläche zum Zeitpunkt der Zündung, wobei sich die Vertiefung insbesondere über diese lichte Höhe erstreckt, d.h. die lichte Höhe im Wesentlichen vollständig innerhalb der Vertiefung liegt.

Alternativ bringt allerdings auch schon eine vertikale Ausdehnung der linearen Zündstrecke in Bezug auf die Brennraumachse von größer gleich 10 %, bevorzugt größer gleich 20 %, weiter bevorzugt größer gleich 30 %, noch weiter bevorzugt größer gleich 40 %, mehr bevorzugt größer gleich 50 %, noch mehr bevorzugt größer gleich 60 %, besonders bevorzugt größer gleich 70 %, höchst bevorzugt größer gleich 80 % und insbesondere größer gleich 90 % bedeutende Vorteile.

In einer besonders vorteilhaften Weiterbildung ist vorgesehen, dass zumindest ein Einspritzmittel, insbesondere Einspritzdüse, für das Einspritzen von Kraftstoff und/oder Luft vorgesehen ist, wobei zumindest eines dieser Einspritzmittel so ausgerichtet ist, dass die Einspritzrichtung nicht identisch mit der Brennraumachse liegt. Zweckmäßig ist die Einspritzrichtung in einem Winkel von 30° bis 150°, bevorzugt von 60° bis 120°, insbesondere von 90° zur Brennraumachse ausgerichtet. Dann wird schon während des Einspritzens dem Kraftstoff-Luft-Gemisch eine radiale Bewegungsrichtung vorgegeben, die sich positiv auf die Verbrennung auswirkt.

In diesem Zusammenhang ist es vorteilhaft, wenn die Einspritzmittel für Luft und die Einspritzmittel für den Kraftstoff gegenüber der Brennraumachse symmetrisch angeordnet sind, wobei besonders bevorzugt die Einspritzrichtungen beider Einspritzmittel auf einer Achse liegen.

Der genannte technische Effekt wird besonders effektiv in jeder nachstehend aufgeführten Variante der Erfindung durch die Anwendung eines speziell gestalteten Brennraumes bei gleichzeitiger Anwendung verschiedenen Zündverfahren für das Kraftstoff-Luft-Gemisch erzielt, da dabei die Vertiefung so ausgestaltet sind, dass die Umlenkung besonders wirksam erfolgt.

Im Brennraum des Verbrennungsmotors, der durch die ebene Kolbenbodenfläche und durch eine Vertiefung im Zylinderkopf gebildet wird, besitzt die Vertiefung erfindungsgemäß die Form eines Kegels, dessen Spitze nicht zur Kolbenbodenfläche gerichtet ist, der Winkel zwischen der ebenen Kolbenbodenfläche und der Mantellinie des Kegels beträgt 40 - 50°, der Radius der Kegelgrundfläche kann kleiner sein als der Zylinderradius oder diesem entsprechen, dabei ist die Zündeinrichtung für das Kraftstoff-Luft-Gemisch (beispielsweise Funkenzündkerze, Glühkerze oder Laser-Zündkerze) in der Kegelspitze längs zu deren Achse angeordnet.

Bei der zweiten Variante des Brennraumes eines Verbrennungsmotors besitzt die Zylinderkopfvertiefung die Form eines Kegelstumpfes, dessen Deckfläche nicht zur ebenen Kolbenbodenfläche gerichtet ist, der Winkel zwischen der ebenen Kolbenbodenfläche und der Mantellinie des Kegelstumpfes beträgt 40 - 50°, der Radius der Grundfläche des Kegelstumpfes kann kleiner sein als der Zylinderradius oder diesem entsprechen, dabei ist die Zündeinrichtung für das Kraftstoff-Luft-Gemisch (beispielsweise Funkenzündkerze, Glühkerze oder Laser-Zündkerze) in der Kegelspitze längs zu deren Achse angeordnet.

Bei der dritten Variante des Brennraumes des Verbrennungsmotors besitzt die Zylinderkopfvertiefung eine stufenförmige Gestalt, die durch die Kombination zwischen einem Kegel und mindestens einem Kegelstumpf oder durch die Kombination von mindestens zwei Kegelstümpfen gebildet wird, der Winkel zwischen der ebenen Kolbenbodenfläche und den Mantellinien des Kegels und der Kegelstümpfe beträgt 40 - 50°, der Radius der Kegelstumpfgrundfläche kann kleiner sein als der Zylinderradius oder diesem entsprechen, dabei ist die Zündeinrichtung für das Kraftstoff-Luft-Gemisch (beispielsweise Funkenzündkerze, Glühkerze oder Laser-Zündkerze) in der Kegelspitze oder im Mittelpunkt der Deckfläche des Kegelstumpfes längs zu deren bzw. zu dessen Achse angeordnet.

Bei der vierten Variante wird der Brennraum eines Verbrennungsmotors durch die ebene Zylinderkopffläche und eine Vertiefung in der Kolbenbodenfläche gebildet, und diese Vertiefung ist erfindungsgemäß als Kegel ausgebildet, dessen Spitze nicht zur Zylinderkopffläche gerichtet ist, der Winkel zwischen der ebenen Zylinderkopffläche und der Mantellinie des Kegels beträgt 40 - 50°, der Radius der Grundfläche des Kegels kann kleiner sein als der Zylinderradius oder diesem entsprechen, dabei ist die Zündeinrichtung für das Kraftstoff-Luft-Gemisch (beispielsweise Funkenzündkerze, Glühkerze oder Laser-Zündkerze) in der Kegelspitze oder im Mittelpunkt der Zylinderkopffläche längs zu deren Achse angeordnet.

Bei der fünften Variante des Brennraumes eines Verbrennungsmotors besitzt die Vertiefung in der Kolbenbodenfläche die Form eines Kegelstumpfes, dessen Deckfläche nicht zur ebenen Zylinderkopffläche gerichtet ist, der Winkel zwischen der ebenen Zylinderkopffläche und der Kegelstumpfmantellinie beträgt 40 - 50° und der Radius der Kegelstumpfgrundfläche kann kleiner sein als der Zylinderradius oder diesem gleich sein, dabei ist die Zündeinrichtung für das Kraftstoff-Luft-Gemisch (beispielsweise Funkenzündkerze, Glühkerze oder Laser-Zündkerze) im Mittelpunkt des Zylinderkopfes angeordnet und längs zur Achse des Kegelstumpfes orientiert.

Bei der sechsten Variante des Brennraumes eines Verbrennungsmotors besitzt die Vertiefung in der Kolbenbodenfläche eine stufenförmige Gestalt, die durch die Kombination zwischen einem Kegel und mindestens einem Kegelstumpf oder durch die Kombination von mindestens zwei Kegelstümpfen gebildet wird, der Winkel zwischen der ebenen Zylinderkopffläche und den Mantellinien des Kegels und der Kegelstümpfe beträgt 40 - 50°, der Radius der Kegelstumpfgrundfläche kann kleiner sein als der Zylinderradius oder diesem entsprechen, dabei ist die Zündeinrichtung für das Kraftstoff-Luft-Gemisch (beispielsweise Funkenzündkerze, Glühkerze oder Laser-Zündkerze) in der Kegelspitze oder im Mittelpunkt des Zylinderkopfes längs zu dessen Vertiefungsachse angeordnet.

Bei allen aufgeführten Varianten ist der Nutzeffekt der Erfindung umso höher, je genauer die Bearbeitungsqualität der glatten Wände des Brennraumes ist.

Die oben genannten Vertiefungsformen, durch die der Brennraum eines Verbrennungsmotors gestaltet wird, bewirken in der Kombination mit den Zündeinrichtungen für das Kraftstoff-Luft-Gemisch (beispielsweise Funkenzündkerze, Glühkerze oder Laser-Zündkerze) die vorzugsweise Bildung einer gerichteten Bewegung der Moleküle des Kraftstoffes, dadurch kommt eine maximale Anzahl der Moleküle des Kraftstoffes bei der Nutzarbeit zum Einsatz. Das Fehlen zylindrischer Wände bei den empfohlenen Brennraumvarianten führt zur Verminderung des uneffektiven Energieverbrauchs bei den Kraftstoffmolekülen (beispielsweise bei Verwendung einer Funkenzündkerze oder einer kurzen Glühkerze) oder zu dessen Vermeidung (beispielsweise bei Verwendung einer Laser- Zündkerze oder einer verlängerten Glühkerze).

Die Anwendung der empfohlenen Brennraumvarianten in Kombination mit der erfindungsgemäßen Zündeinrichtung für das Kraftstoff-Luft-Gemisch (beispielsweise Funkenzündkerze, Glühkerze oder Laser-Zündkerze) führt zur Verbesserung der Effektivität der Umwandlung der kinetischen Energie der Moleküle des Kraftstoffes in Nutzarbeit sowie zur Leistungssteigerung und zur Erhöhung des Wirkungsgrades des Verbrennungsmotors.

Durch die maximal glatte Wandausführung bei jeder Brennraumvariante zwecks Unterdrückung der Wellenwirkung wird die Brennraumwanderhitzung verringert, da die Schlagwellen sowie die elektromagnetischen, optischen, infraroten und ultravioletten Wellen von den Brennraumwänden reflektiert werden. Die Wärmeverluste an der Brennraumwand sowie durch die Abgabe der Wärme an das Kühlmittel können somit verringert werden. Darüber hinaus kann die Zerstörung des Brennraumes durch überhöhte Temperaturen verhindert werden.

Die im Brennraum entstehenden Schall- und Schlagwellen erzeugen durch ihre Reflektion an der Brennraumwand zusätzliche Nutzarbeit. Dies führt zu einer zusätzlichen Erhöhung der Effektivität bei der Umwandlung der kinetischen Energie der Moleküle des Kraftstoffes in Nutzarbeit sowie zur Verbesserung der Motorleistung und des Wirkungsgrades des Verbrennungsmotors.

Unabhängiger Schutz wird beansprucht für das erfindungsgemäße Zündverfahren und den erfindungsgemäßen Verbrennungsmotor. Der erfindungsgemäße Verbrennungsmotor ist in einer dem Fachmann bekannten Art und Weise aufgebaut und beinhaltet den erfindungsgemäßen Brennraum.

Sämtliche Merkmale der vorliegenden Erfindung lassen sich beliebig miteinander kombinieren, wenn nicht ausdrücklich etwas anderes angegeben ist.

Die Merkmale der vorliegenden Erfindung und weitere Vorteile werden im Folgenden anhand der Beschreibung bevorzugter Ausführungsbeispiele deutliche werden. Die Erläuterung der Erfindung erfolgt dabei mittels der rein schematischen Figuren:
- Fig. 1: zeigt den Längsschnitt durch den Brennraum, die durch die ebene Kolbenbodenfläche und die im Zylinderkopf vorhandene Vertiefung gebildet wird, die Vertiefung hat die Form eines Kegels, und die Zündkerze befindet sich auf der Kegelspitze;
- Fig. 2: zeigt das Gleiche, die Vertiefung hat jedoch die Form eines Kegelstumpfes, der Brennraum ist im Längsschnitt dargestellt;
- in den Fig. 3 und 4: sind der Brennraum, der durch die ebene Kolbenbodenfläche und die stufenförmige Vertiefung im Zylinderkopf gebildet wird, und der Brennraumlängsschnitt dargestellt;
- Fig. 5: zeigt einen Brennraum, der durch die ebene Zylinderkopffläche und durch die kegelförmige Vertiefung im Kolbenboden gebildet wird, und den Brennraumlängsschnitt;
- Fig. 6: zeigt das Gleiche und den Brennraumlängsschnitt, dabei hat die Vertiefung im Kolbenboden jedoch die Form eines Kegelstumpfes;
- die Figuren 7 und 8: zeigen den Brennraum, der durch den ebenen Zylinderkopf und durch die stufenförmige Vertiefung im Kolbenboden gebildet wird, sowie den Brennraumlängsschnitt,
- die Figuren 9 bis 11: zeigen verschiedenen Ausgestaltungen hinsichtlich der Einspritzanordnung.

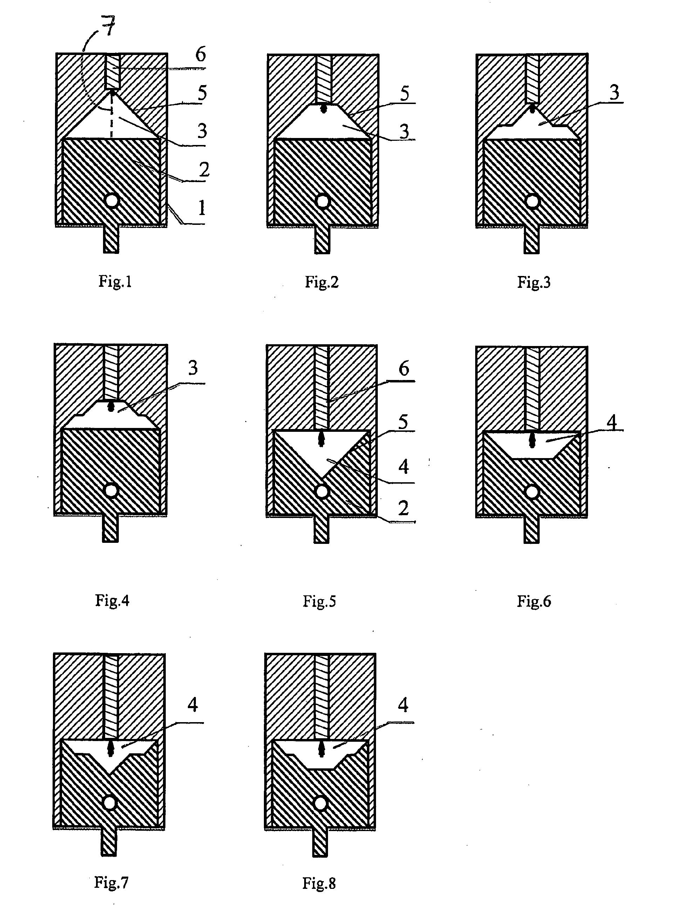

Es ist deutlich zu erkennen, dass der Brennraum des erfindungsgemäßen Verbrennungsmotors einen Zylinder 1 und einen Kolben 2 aufweist. Der Brennraum wird durch die ebene Oberfläche des Kolbenbodens 2 und durch die Vertiefung 3 im Zylinderkopf 1 gebildet (vgl. beispielsweise Fig. 1). Der Brennraum kann auch durch die ebene Zylinderkopffläche 1 und durch die Vertiefung 4 im Kolbenboden 2 gebildet werden (vgl. beispielsweise Fig. 5). Alternativ (nicht gezeigt) können auch Vertiefungen im Kolben 2 und im Zylinderkopf 1 miteinander kombiniert werden.

Jede der Vertiefungen 3 und 4 kann die Form eines Kegels, eines Kegelstumpfes oder einer Stufe haben. Die Vertiefungen 3 und 4 können auch als spiral- oder ringförmige Nut ausgeführt werden, die im Längsschnitt des Brennraumes die Form eines Dreiecks, eines Trapezes oder einer Stufe besitzt oder durch einen Halbkreis oder Bogen begrenzt wird.

Die Brennraumwände 5 sind zwecks Unterdrückung der Wellenwirkung mit maximal glatten Oberflächen hergestellt. Weiterhin sind Zündeinrichtungen 6 vorgesehen und der Brennraum besitzt eine Brennraumachse 7.

Der zwischen dem Kolbenboden oder zwischen dem Zylinderkopf und der Mantellinie des Kegels oder des Kegelstumpfes einzustellende optimale Winkel beträgt 40° - 50°. Bei Verringerung dieses Winkels unter 40° oder bei seiner Vergrößerung über 50° tritt eine Senkung der Effektivität der Umwandlung der kinetischen Energie der Moleküle des Kraftstoffes in Nutzarbeit ein.

Die Erfindung funktioniert wie folgt. Betrachten wir nun folgende Variante: Die kegelförmige Vertiefung bewirkt bei einem Winkel von 45° zwischen der ebenen Oberfläche und der Mantellinie des Kegels, dass die Zündung des Kraftstoff-Luft-Gemisches bei Einsatz eines Laserstrahls oder einer Glühkerze 6 auf der gesamten Achse der Vertiefung gleichzeitig verläuft.

Die Zündung des Kraftstoff-Luft-Gemisches längs zur Brennraumachse 7 bei Einsatz eines Laserstrahls oder einer Glühkerze gibt den Molekülen des Kraftstoffes (der Verbrennungsprodukte) gegenüber der Zündlinie eine radiale Bewegungsrichtung vor. Nach der Reflektierung an der Vertiefungswand 5 unter einem Winkel von 45° setzen die Moleküle ihre Bewegung längs zur Bewegungsrichtung des Kolbens auf parallelen, sich nicht überschneidenden Bewegungsbahnen fort, werden dann von der ebenen Oberfläche reflektiert und bewegen sich wiederum in Richtung der kegelförmigen Vertiefung, und dies geschieht in der Zykluszeit mehrfach. Dabei kommt es nicht zum Kontakt zwischen den Molekülen des Kraftstoffes und der Zylinderwandoberfläche, das heißt alle Moleküle verrichten eine Nutzarbeit. Da die von den Molekülen innerhalb eines Zeitabschnittes zurückgelegten Strecken gleich sind, bewegen sich die Moleküle in einer schmalen Front, die gegenüber der ebenen Kolbenboden- oder Zylinderkopffläche parallel ist, und dies unterbindet deren eventuelle Zusammenstöße und die Chaotisierung des Systems innerhalb einer langen Zeitdauer, die die Zykluszeit des Motors bedeutend überschreitet. Die entstehenden elektromagnetischen und Schlagwellen sowie die Gaspartikel mit hoher Energie werden von der glatten Brennraumoberfläche 5 reflektiert, wodurch deren Erwärmung verringert und eine effektive Umwandlung der kinetischen Energie sowohl des Gases als auch der Wellen in Nutzarbeit gewährleistet wird. Auf diese Weise wird der Druck auf den Kolben bedeutend erhöht und die Erwärmung des Zylinderblockes des Verbrennungsmotors in hohem Maße verringert, und dies hat die Erhöhung seiner Lebensdauer zur Folge.

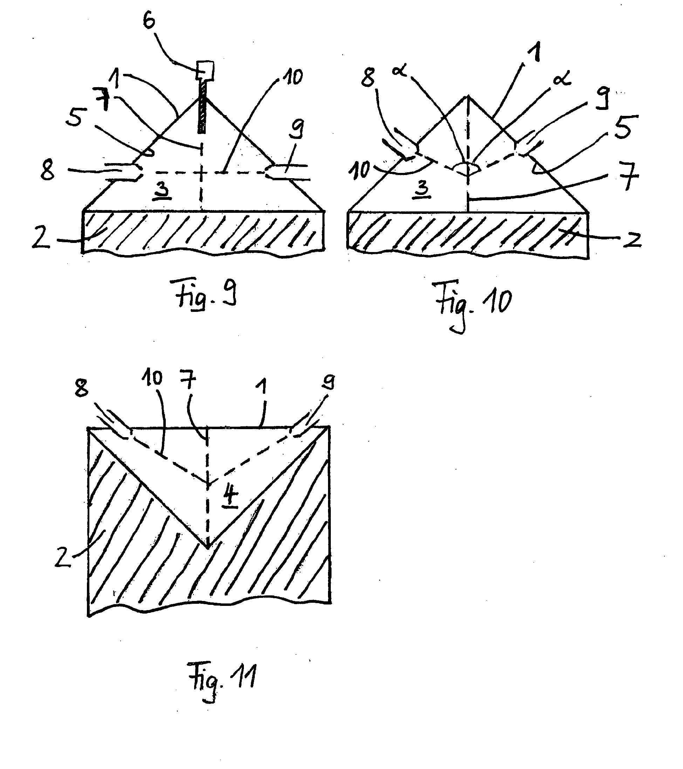

In Fig. 9 ist beispielhaft die Anordnung der Zündeinrichtung 6 im Zylinderkopf 1, die als lange Glühkerze 6 ausgebildet ist, und einer Einspritzdüse 8 für Luft und einer Einspritzdüse 9 für den Kraftstoff, beispielsweise Benzin, gezeigt. Es ist zu erkennen, dass die Einspritzdüsen 8, 9 symmetrisch zueinander angeordnet sind, wobei die Einspritzrichtungen auf einer Linie 10 liegen. Diese Line 10 ist senkrecht zur Brennraumachse 7 angeordnet. Dadurch wird der maximale Effekt erzielt, da das sich ausbildende Kraftstoff-Luft-Gemisch in Bezug auf die Brennraumachse 7 schon radiale Impulsanteile aufweist und außerdem das Gemischbild sehr symmetrisch sich ausbildet und die Gemischteile durch das Zusammenstoßen von Luft und Kraftstoff sehr klein zerstäubt werden, was ebenfalls zu einer besseren Verbrennung führt.

In Fig. 10 sind die beiden Einspritzdüsen 8, 9 nicht senkrecht, sondern unter einem spitzen Winkel α in Bezug auf die Brennraumachse 7 angeordnet. Auch hier stellt sich ein zusätzlicher positiver Effekt ein, weil das Kraftstoff-Luft-Gemisch radiale Bewegungsanteile aufweist.

Während die Fig. 9 und 10 eine Brennraumgeometrie mit einer Vertiefung 3 im Zylinderkopf 1 zeigen, stellt Fig. 11 schließlich eine Brennraumgeometrie mit einer Vertiefung 4 im Kolben 2 dar, wobei die Einspritzdüsen 8, 9 wiederum nicht senkrecht, sondern unter einem spitzen Winkel α in Bezug auf die Brennraumachse 7 angeordnet sind.

### Quellenverzeichnis

1. Orlin A. S., Alekseew W. P., Kostygow N. I. und andere. Verbrennungsmotoren. Aufbau und Funktionsweise von Kolbenmotoren und kombinierten Motoren. M.: Maschinostrojenie 1970, S. 103
2. Chatschijan A. S., Morosow K. A., Lukanin W. N. und andere. Verbrennungsmotoren - M.: Wysschaja schkola, 1985, S. 48 und 76
3. Urheberschein der. UdSSR Nr. 337547, KI. F 02 B 23/08, 1972.
4. Patent DE 3145073 A1, Class F 02 B 45/10, 1983
5. Patent DE 3545440 A1, Class F 02 B 17/00, 1987
6. Patent der Russischen Föderation Nr. 2249718, Kl. 02 F1/21, F 02 F3/28, F 02 B23/00, 2005
7. IPC8 Class: AFO2B1900FI, Publication date: 03/17/2011, Patent application number: 20110061623
8. Saweljew I. W. Kurs der allgemeinen Physik in 4 Bänden, Band 1, Seite 363. Moskau, "Knorus" 2009

## Patentansprüche

1. Brennraum eines Verbrennungsmotors, der einen Kolben (2) mit einer Kolbenbodenfläche und einen Zylinderkopf (1) mit einer Zylinderkopffläche aufweist und eine Brennraumachse (7) besitzt, wobei in der Kolbenbodenfläche und/oder in der Zylinderkopffläche zumindest eine Vertiefung (3, 4) vorgesehen ist, **dadurch gekennzeichnet, dass** eine Zündeinrichtung (6) längs zur Brennraumachse (7) angeordnet ist, wobei die Zündeinrichtung (6) angepasst ist, eine lineare Zündung längs zur Brennraumachse (7) so zu erzeugen, dass ein zylinderförmiger Zündimpuls entsteht, bei dem im Wesentlichen nur radiale Impulsbestandteile in Bezug auf die Brennraumachse vorliegen,
wobei die Vertiefung (3) im Zylinderkopf (1) nach einer der folgenden Vorschriften gebildet ist:
a) die Vertiefung (3) ist im Zylinderkopf (1) gebildet, wobei die Vertiefung (3) die Form eines Kegels besitzt, dessen Spitze nicht zur Fläche des Kolbens (2) gerichtet ist, wobei die Zündeinrichtung in der Kegelspitze angeordnet ist, oder
b) die Vertiefung (3) ist im Zylinderkopf (1) gebildet, wobei die Vertiefung (3) die Form eines Kegelstumpfes besitzt, dessen Deckfläche nicht zur Fläche des Kolbens (2) gerichtet ist, wobei die Zündeinrichtung in der Mitte der Deckfläche des Kegelstumpfes angeordnet ist, oder
c) die Vertiefung (3) ist im Zylinderkopf (1) gebildet, wobei die Vertiefung (3) die Form einer Stufe besitzt, die durch die Kombination zwischen einem Kegel und mindestens einem Kegelstumpf oder durch die Kombination von mindestens zwei Kegelstümpfen gebildet wird, wobei die Zündeinrichtung in der Kegelspitze oder in der Mitte der Deckfläche des Kegelstumpfes eine Zündeinrichtung angeordnet ist, und/oder
wobei die Vertiefung (4) in der Kolbenbodenfläche nach einer der folgenden Vorschriften gebildet ist:
d) die Vertiefung (4) ist in der Kolbenbodenfläche gebildet, wobei die Vertiefung (4) die Form eines Kegels besitzt, dessen Spitze nicht zum Zylinderkopf (1) gerichtet ist, wobei die Zündeinrichtung in der Mitte der ebenen Zylinderkopffläche angeordnet ist, oder
e) die Vertiefung (4) ist in der Kolbenbodenfläche gebildet, wobei die Vertiefung (4) die Form eines Kegelstumpfes besitzt, dessen Deckfläche nicht zum Zylinderkopf (1) gerichtet ist, wobei die Zündeinrichtung in der Mitte der ebenen Zylinderkopffläche angeordnet ist oder
f) die Vertiefung (4) ist in der Kolbenbodenfläche gebildet, wobei die Vertiefung (4) die Form einer Stufe besitzt, die durch die Kombination zwischen einem Kegel und mindestens einem Kegelstumpf oder durch die Kombination von mindestens zwei Kegelstümpfen gebildet wird, wobei die Zündeinrichtung in der Kegelspitze oder in der Mitte der ebenen Zylinderkopffläche angeordnet ist,
wobei für die Vorschriften a) bis c) vorgesehen ist, dass der Winkel zwischen der ebenen Kolbenbodenfläche und der Mantellinie des Kegels und des Kegelstumpfes 40° - 50° beträgt und für die Vorschriften d) bis f) vorgesehen ist, dass der Winkel zwischen der ebenen Zylinderkopffläche und der Mantellinie des Kegels und des Kegelstumpfes 40° - 50° beträgt,
so dass die radialen Impulsbestandteile in ihrer Gesamtheit mittels der Vertiefung in Längsrichtung zur Brennraumachse ausgerichtet werden.

2. Brennraum nach Anspruch 1, **dadurch gekennzeichnet, dass** die Zündeinrichtung eine Funkenzündkerze, eine Glühkerze oder eine Laser-Zündkerze ist.

3. Brennraum nach einem der vorherigen Ansprüche, **dadurch gekennzeichnet, dass** die Zündeinrichtung angepasst ist, die Zündung eines Kraftstoff-Luft-Gemisches auf der gesamten Achse der Vertiefung (3; 4) gleichzeitig zu bewirken, oder so angepasst ist, **dass** die vertikale Ausdehnung der linearen Zündstrecke in Bezug auf die Brennraumachse größer gleich 10 %, bevorzugt größer gleich 20 %, weiter bevorzugt größer gleich 30 %, noch weiter bevorzugt größer gleich 40 %, mehr bevorzugt größer gleich 50 %, noch mehr bevorzugt größer gleich 60 %, besonders bevorzugt größer gleich 70 %, höchst bevorzugt größer gleich 80 % und insbesondere größer gleich 90 % ist.

4. Brennraum nach einem der vorherigen Ansprüche, **dadurch gekennzeichnet, dass** die lichte Höhe der Brennraumachse im Zündvorgang innerhalb der Vertiefung liegt.

5. Brennraum nach einem der vorherigen Ansprüche, **dadurch gekennzeichnet, dass** der Radius der Grundfläche des Kegels kleiner sein kann als der Zylinderradius oder diesem gleich sein.

6. Brennraum nach einem der vorherigen Ansprüche, **dadurch gekennzeichnet,** der Radius der Grundfläche des Kegelstumpfes kleiner sein kann als der Zylinderradius oder diesem gleich sein.

7. Brennraum nach einem der vorherigen Ansprüche, **dadurch gekennzeichnet, dass** zumindest ein Einspritzmittel, insbesondere Einspritzdüse, für das Einspritzen von Kraftstoff und/oder Luft vorgesehen ist, wobei zumindest eines dieser Einspritzmittel so ausgerichtet ist, dass die Einspritzrichtung nicht identisch mit der Brennraumachse liegt, wobei vorteilhaft vorgesehen ist, dass die Einspritzrichtung in einem Winkel von 30° bis 150°, bevorzugt von 60° bis 120°, insbesondere von 90° zur Brennraumachse ausgerichtet ist.

8. Brennraum nach Anspruch 7, **dadurch gekennzeichnet, dass** die Einspritzmittel für Luft und die Einspritzmittel für den Kraftstoff gegenüber der Brennraumachse symmetrisch angeordnet sind, wobei besonders bevorzugt die Einspritzrichtungen beider Einspritzmittel auf einer Achse liegen.

9. Verfahren zur Zündung eines Kraftstoff-Luft-Gemisches in einem Brennraum eines Verbrennungsmotors, wobei der Brennraum einen Zylinder mit einer Zylinderkopffläche und einen Kolben mit einer Kolbenbodenfläche aufweist und eine Brennraumachse (7) besitzt und eine Vertiefung (3; 4) in der Zylinderkopffläche und/oder der Kolbenbodenfläche vorgesehen ist, **dadurch gekennzeichnet, dass** eine Zündeinrichtung längs zur Brennraumachse (7) angeordnet ist, wobei die Zündeinrichtung angepasst ist, eine lineare Zündung längs zur Brennraumachse (7) so zu erzeugen, dass ein zylinderförmiger Zündimpuls entsteht, bei dem im Wesentlichen nur radiale Impulsbestandteile in Bezug auf die Brennraumachse vorliegen, wobei die Vertiefung (3) im Zylinderkopf (1) nach einer der folgenden Vorschriften gebildet ist:
a) die Vertiefung (3) ist im Zylinderkopf (1) gebildet, wobei die Vertiefung (3) die Form eines Kegels besitzt, dessen Spitze nicht zur Fläche des Kolbens (2) gerichtet ist, wobei die Zündeinrichtung in der Kegelspitze angeordnet ist, oder
b) die Vertiefung (3) ist im Zylinderkopf (1) gebildet, wobei die Vertiefung (3) die Form eines Kegelstumpfes besitzt, dessen Deckfläche nicht zur Fläche des Kolbens (2) gerichtet ist, wobei die Zündeinrichtung in der Mitte der Deckfläche des Kegelstumpfes angeordnet ist, oder
c) die Vertiefung (3) ist im Zylinderkopf (1) gebildet, wobei die Vertiefung (3) die Form einer Stufe besitzt, die durch die Kombination zwischen einem Kegel und mindestens einem Kegelstumpf oder durch die Kombination von mindestens zwei Kegelstümpfen gebildet wird, wobei die Zündeinrichtung in der Kegelspitze oder in der Mitte der Deckfläche des Kegelstumpfes eine Zündeinrichtung angeordnet ist, und/oder wobei die Vertiefung (4) in der Kolbenbodenfläche nach einer der folgenden Vorschriften gebildet ist:
d) die Vertiefung (4) ist in der Kolbenbodenfläche gebildet, wobei die Vertiefung (4) die Form eines Kegels besitzt, dessen Spitze nicht zum Zylinderkopf (1) gerichtet ist, wobei die Zündeinrichtung in der Mitte der ebenen Zylinderkopffläche angeordnet ist, oder
e) die Vertiefung (4) ist in der Kolbenbodenfläche gebildet, wobei die Vertiefung (4) die Form eines Kegelstumpfes besitzt, dessen Deckfläche nicht zum Zylinderkopf (1) gerichtet ist, wobei die Zündeinrichtung in der Mitte der ebenen Zylinderkopffläche angeordnet ist oder
f) die Vertiefung (4) ist in der Kolbenbodenfläche gebildet, wobei die Vertiefung (4) die Form einer Stufe besitzt, die durch die Kombination zwischen einem Kegel und mindestens einem Kegelstumpf oder durch die Kombination von mindestens zwei Kegelstümpfen gebildet wird, wobei die Zündeinrichtung in der Kegelspitze oder in der Mitte der ebenen Zylinderkopffläche angeordnet ist,
wobei für die Vorschriften a) bis c) vorgesehen ist, dass der Winkel zwischen der
ebenen Kolbenbodenfläche und der Mantellinie des Kegels und des Kegelstumpfes 40° - 50° beträgt und für die Vorschriften d) bis f) vorgesehen ist, dass der Winkel zwischen der ebenen Zylinderkopffläche und der Mantellinie des Kegels und des Kegelstumpfes 40° - 50° beträgt,
wobei eine lineare Zündung längs zur Brennraumachse (7) vorgenommen wird, so dass die radialen Impulsbestandteile in ihrer Gesamtheit mittels der Vertiefung in Längsrichtung zur Brennraumachse ausgerichtet werden.

10. Verfahren nach Anspruch 9, **dadurch gekennzeichnet, dass** ein Brennraum nach einem der Ansprüche 1 bis 8 verwendet wird.

11. Verbrennungsmotor, **gekennzeichnet durch** einen Brennraum nach einem der Ansprüche 1 bis 8.

## Claims

1. Combustion chamber of a combustion engine, having a piston (2) with a piston bottom surface and a cylinder head (1) with a cylinder head surface and having an combustion chamber axis (7), wherein at least one depression (3, 4) is provided in the piston bottom surface and/or in the cylinder head surface, **characterized in that** one ignition device (6) is disposed alongside of the combustion chamber axis (7), the ignition device being adapted so as to create a linear ignition alongside of the combustion chamber axis in such a way that a cylindrical ignition impulse occur, having essentially only radial impulse components with respect to the combustion chamber axis,
wherein the depression (3) in the cylinder head (1) is formed according to one of the following rules:
a) depression (3) is created in the cylinder head (1), wherein depression (3) has the form of a cone whose tip is not oriented towards the surface of piston (2), the ignition device being positioned in the tip of the cone, or
a) depression (3) is created in the cylinder head (1), wherein depression (3) has the form of a truncated cone whose upper surface is not oriented towards the surface of piston (2), the ignition device being positioned in the center of the upper surface of the truncated cone, or
c) depression (3) is created in the cylinder head (1), wherein depression (3) has the form of a step created by the combination between a cone and at least one truncated cone or by the combination of at least two truncated cones, the ignition device being positioned at the tip of the cone or in the center of the upper surface of the truncated cone
and/or
wherein the depression (4) in the piston bottom surface is formed according to one of the following rules:
d) depression (4) is created in the piston bottom surface, wherein depression (4) has the form of a cone whose tip is not oriented towards the cylinder head (1), the ignition device being positioned in the center of the plane surface of the cylinder head, or
e) depression (4) is created in the piston bottom surface, wherein depression (4) has the form of a truncated cone, whose upper surface is not oriented towards the cylinder head (1), the ignition device being positioned in the center of the plane surface of the cylinder head, or
f) depression (4) is created in the piston bottom surface, wherein depression (4) has the form of a step created by the combination between a cone and at least one truncated cone or by the combination of at least two truncated cones, the ignition device being positioned at the tip of the cone or in the center of the upper surface of the truncated cone,
wherein for rules a) to c) it is provided that the angle between the plane piston bottom surface and the generatrix of the cone and of the truncated cone is of 40° - 50° and for rules d) to f) it is provided that the angle between the plane cylinder head surface and the generatrix of the cone and of the truncated cone is of 40° - 50°, so that the radial impulse components in their entirety are aligned through the depression alongside of the combustion chamber axis.

2. Combustion chamber according to Claims 1, **characterized in that** the ignition device is a spark plug, a glow plug or a laser spark plug.

3. Combustion chamber according to one of the preceding Claims, **characterized in that** the ignition device is adapted to cause the ignition of a fuel-air mixture simultaneously on the entire axis of depression (3; 4), or is so adapted **that** the vertical extension of the linear ignition length in relation to the combustion chamber axis is of ≥ 10 %, preferably ≥ 20 %, more preferably ≥ 30 %, even more preferably ≥ 40 %, highly preferably ≥ 50 %, more highly preferably ≥ 60 %, especially preferably ≥ 70 %, extremely preferably ≥ 80 % and particularly preferably ≥ 90 %.

4. Combustion chamber according to one of the preceding Claims, **characterized in that** the clear height of the combustion chamber axis is situated within the depression.

5. Combustion chamber according to one of the preceding Claims, **characterized in that** the radius of the bottom surface of the cone can be smaller than or equal to the cylinder radius.

6. Combustion chamber according to one of the preceding Claims, **characterized in that** the radius of the bottom surface of the truncated cone can be smaller than or equal to the cylinder radius.

7. Combustion chamber according to one of the preceding Claims, **characterized in that** at least one means of injection, in particular an injection nozzle, is provided for the injection of fuel and/or air, wherein at least one of these means of injection is so oriented that the injection direction is not identical with the combustion chamber axis, wherein preferably the injection direction is oriented to the combustion chamber axis with an angle of 30° to 150°, preferably of 60° to 120°, in particular 90°.

8. Combustion chamber according to Claim 7, **characterized in that** the means of injection for air and means of injection for fuel are disposed symmetrically with respect to the combustion chamber axis, wherein preferably the injection directions of both means of injection are on one axis.

9. Method for the ignition of a fuel-air mixture in the combustion chamber of a combustion engine, wherein the combustion chamber has a cylinder with a cylinder head surface and a piston with a piston bottom surface and has an combustion chamber axis (7) and a depression (3, 4) in the cylinder head surface and/or the piston bottom surface, **characterized in that** an ignition device is positioned alongside of the combustion chamber axis (7), the ignition device being adapted to create linear ignition alongside of the combustion chamber axis (7) in such a way that a cylindrical ignition impulse occur, having essentially only radial impulse components with respect to the combustion chamber axis,
wherein the depression (3) in the cylinder head (1) is formed according to one of the following rules:
a) depression (3) is created in the cylinder head (1), wherein depression (3) has the form of a cone whose tip is not oriented towards the surface of piston (2), the ignition device being positioned in the tip of the cone, or
b) depression (3) is created in the cylinder head (1), wherein depression (3) has the form of a truncated cone whose upper surface is not oriented towards the surface of piston (2), the ignition device being positioned in the center of the upper surface of the truncated cone, or
c) depression (3) is created in the cylinder head (1), wherein depression (3) has the form of a step created by the combination between a cone and at least one truncated cone or by the combination of at least two truncated cones, the ignition device being positioned at the tip of the cone or in the center of the upper surface of the truncated cone
and/or
wherein the depression (4) in the piston bottom surface is formed according to one of the following rules:
d) depression (4) is created in the piston bottom surface, wherein depression (4) has the form of a cone whose tip is not oriented towards the cylinder head (1), the ignition device being positioned in the center of the plane surface of the cylinder head, or
e) depression (4) is created in the piston bottom surface, wherein depression (4) has the form of a truncated cone, whose upper surface is not oriented towards the cylinder head (1), the ignition device being positioned in the center of the plane surface of the cylinder head, or
f) depression (4) is created in the piston bottom surface, wherein depression (4) has the form of a step created by the combination between a cone and at least one truncated cone or by the combination of at least two truncated cones, the ignition device being positioned at the tip of the cone or in the center of the upper surface of the truncated cone,
wherein for rules a) to c) it is provided that the angle between the plane piston bottom surface and the generatrix of the cone and of the truncated cone is of 40° - 50° and for rules d) to f) it is provided that the angle between the plane cylinder head surface and the generatrix of the cone and of the truncated cone is of 40° - 50°,
wherein a linear ignition alongside of the combustion chamber axis is carried out, so that the radial impulse components in their entirety are aligned through the depression alongside of the combustion chamber axis.

10. Method according to claim 9, **characterized in that** an combustion chamber according to one of Claims 1 to 8 is used.

11. Combustion engine, **characterized by** an combustion chamber according to one of Claims 1 to 8.

## Revendications

1. Chambre de combustion d'un moteur à combustion interne, lequel présente un piston (2) avec une surface de fond de piston et une tête de culasse (1) avec une surface de la tête de culasse et lequel possède un axe de chambre de combustion (7), tout au moins une cavité (3, 4) étant prévue dans la surface de fond de piston et/ou dans la surface de la tête de culasse, **caractérisée en ce qu**'un système d'allumage (6) est disposé dans le sens longitudinal par rapport à l'axe de la chambre de combustion (7), le système d'allumage (6) étant adapté en vue de générer un allumage linéaire dans le sens longitudinal par rapport à l'axe de la chambre de combustion (7), de telle sorte qu'il en résulte une impulsion d'allumage de forme cylindrique, pour laquelle il n'existe pour l'essentiel que des parties d'impulsion radiales par rapport à la chambre de l'axe de combustion,
la cavité (3) étant formée dans la tête de culasse (1) selon l'une des dispositions suivantes :
a) la cavité (3) est formée dans la tête de culasse (1), la cavité (3) possédant la forme d'un cône, dont la pointe n'est pas orientée dans la direction de la surface du piston (2), le système d'allumage étant disposé dans la pointe du cône, ou
b) la cavité (3) est formée dans la tête de culasse (1), la cavité (3) possédant la forme d'un tronc de cône, dont la surface de couverture n'est pas orientée dans la direction de la surface du piston (2), le système d'allumage étant disposé au centre de la surface de couverture du tronc de cône, ou
c) la cavité (3) est formée dans la tête de culasse (1), la cavité (3) possédant la forme d'un étage, lequel est formé par la combinaison entre un cône et au moins un tronc de cône, ou lequel est formé par la combinaison d'au moins deux troncs de cône, le système d'allumage étant disposé dans la pointe du cône ou un système d'allumage étant disposé au centre de la surface de couverture du tronc de cône, et/ou la cavité (4) étant formée dans la surface de fond de piston selon l'une des dispositions suivantes
d) la cavité (4) est formée dans la surface de fond de piston, la cavité (4) possédant la forme d'un cône, dont la pointe n'est pas orientée dans la direction de la tête de culasse (1), le système d'allumage étant disposé au centre de la surface plane de la culasse, ou
e) la cavité (4) est formée dans la surface de fond de piston, la cavité (4) possédant la forme d'un tronc de cône, dont la surface de couverture n'est pas orientée dans la direction de la tête de culasse (1), le système d'allumage étant disposé au centre de la surface plane de la culasse ou
f) la cavité (4) est formée dans la surface de fond de piston, la cavité (4) possédant la forme d'un étage, lequel est formé par la combinaison entre un cône et au moins un tronc de cône, ou lequel est formé par la combinaison d'au moins deux troncs de cône, le système d'allumage étant disposé dans la pointe du cône ou au centre de la surface plane de la culasse,
étant considéré qu'il est prévu pour les dispositions a) à c) que l'angle entre la surface plane de fond de piston et la ligne de la gaine du cône et du tronc de cône soit compris entre 40° et 50° et qu'il est prévu pour les dispositions d) à f) que l'angle entre la surface plane de culasse et la ligne de la gaine du cône et du tronc de cône soit compris entre 40° et 50°,
de telle sorte que les parties d'impulsion radiales sont alignées dans leur totalité, au moyen de la cavité, dans la direction longitudinale de la chambre de l'axe de combustion.

2. Chambre de combustion selon la revendication 1, **caractérisée en ce que** le système d'allumage est une bougie d'allumage par étincelles, une bougie à incandescence ou une bougie d'allumage par laser.

3. Chambre de combustion selon l'une des revendications précédentes, **caractérisée en ce que** le système d'allumage est adapté afin de produire simultanément l'allumage d'un mélange composé de carburant et d'air sur la totalité de l'axe de la cavité (3 ; 4), ou est adapté de telle sorte que l'extension verticale de l'intervalle d'allumage linéaire par rapport à la chambre de l'axe de combustion est supérieure ou égale à 10 %, est de préférence supérieure ou égale à 20 %, est en outre de préférence supérieure ou égale à 30 %, est de manière plus préférée supérieure ou égale à 40 %, est de manière encore plus préférée supérieure ou égale à 50 %, est en outre de manière encore plus préférée supérieure ou égale à 60 %, est en particulier de préférence supérieure ou égale à 70 %, est de manière extrêmement préférée supérieure ou égale à 80 % et est tout particulièrement préférée supérieure ou égale à 90 %.

4. Chambre de combustion selon l'une des revendications précédentes, **caractérisée en ce que** la hauteur libre de la chambre de l'axe de combustion dans le processus d'allumage se trouve à l'intérieur de la cavité.

5. Chambre de combustion selon l'une des revendications précédentes, **caractérisée en ce que** le rayon de la surface de base du cône peut être plus petit que le rayon de la culasse ou peut être de dimension égale à ce dernier.

6. Chambre de combustion selon l'une des revendications précédentes, **caractérisée en ce que** le rayon de la surface de base du tronc de cône peut être plus petit que le rayon de la culasse ou peut être de dimension égale à ce dernier.

7. Chambre de combustion selon l'une des revendications précédentes, **caractérisée en ce que** tout au moins un moyen d'injection, en particulier une buse d'injection, est prévu pour l'injection de carburant et/ou d'air, tout au moins l'un de ces moyens d'injection étant aligné de telle sorte que la direction de l'injection n'est pas identique à l'axe de la chambre de combustion, étant considéré qu'il est prévu de manière avantageuse que la direction de l'injection soit alignée dans un angle compris entre 30° et 150°, soit alignée de préférence dans un angle compris entre 60° et 120°, soit alignée en particulier dans un angle de 90° par rapport à l'axe de la chambre de combustion.

8. Chambre de combustion selon la revendication 7, **caractérisée en ce que** les moyens d'injection pour l'air et les moyens d'injection pour le carburant sont disposés de manière symétrique par rapport à l'axe de la chambre de combustion, les directions de l'injection des deux moyens d'injection étant situées en particulier de préférence sur un axe.

9. Procédé destiné à l'allumage d'un mélange composé de carburant et d'air dans une chambre de combustion d'un moteur à combustion interne, la chambre de combustion présentant une culasse avec une surface de la tête de culasse et un piston avec une surface de fond de piston, et lequel possédant un axe de chambre de combustion (7) et une cavité (3, 4) étant prévue dans la surface de la tête de culasse et/ou dans la surface de fond de piston, **caractérisé en ce qu'**un système d'allumage est disposé dans le sens longitudinal par rapport à l'axe de la chambre de combustion (7), le système d'allumage étant adapté en vue de générer un allumage linéaire dans le sens longitudinal par rapport à l'axe de la chambre de combustion (7), de telle sorte qu'il en résulte une impulsion d'allumage de forme cylindrique, pour laquelle il n'existe pour l'essentiel que des parties d'impulsion radiales par rapport à la chambre de l'axe de combustion,
la cavité (3) étant formée dans la tête de culasse (1) selon l'une des dispositions suivantes :
a) la cavité (3) est formée dans la tête de culasse (1), la cavité (3) possédant la forme d'un cône, dont la pointe n'est pas orientée dans la direction de la surface du piston (2), le système d'allumage étant disposé dans la pointe du cône, ou
b) la cavité (3) est formée dans la tête de culasse (1), la cavité (3) possédant la forme d'un tronc de cône, dont la surface de couverture n'est pas orientée dans la direction de la surface du piston (2), le système d'allumage étant disposé au centre de la surface de couverture du tronc de cône, ou
c) la cavité (3) est formée dans la tête de culasse (1), la cavité (3) possédant la forme d'un étage, lequel est formé par la combinaison entre un cône et au moins un tronc de cône, ou lequel est formé par la combinaison d'au moins deux troncs de cône, le système d'allumage étant disposé dans la pointe du cône ou un système d'allumage étant disposé au centre de la surface de couverture du tronc de cône, et/ou la cavité (4) étant formée dans la surface de fond de piston selon l'une des dispositions suivantes
d) la cavité (4) est formée dans la surface de fond de piston, la cavité (4) possédant la forme d'un cône, dont la pointe n'est pas orientée dans la direction de la tête de culasse (1), le système d'allumage étant disposé au centre de la surface plane de la culasse, ou
e) la cavité (4) est formée dans la surface de fond de piston, la cavité (4) possédant la forme d'un tronc de cône, dont la surface de couverture n'est pas orientée dans la direction de la tête de culasse (1), le système d'allumage étant disposé au centre de la surface plane de la culasse ou
f) la cavité (4) est formée dans la surface de fond de piston, la cavité (4) possédant la forme d'un étage, lequel est formé par la combinaison entre un cône et au moins un tronc de cône, ou lequel est formé par la combinaison d'au moins deux troncs de cône, le système d'allumage étant disposé dans la pointe du cône ou au centre de la surface plane de la culasse,
étant considéré qu'il est prévu pour les dispositions a) à c) que l'angle entre la surface plane de fond de piston et la ligne de la gaine du cône et du tronc de cône soit compris entre 40° et 50° et qu'il est prévu pour les dispositions d) à f) que l'angle entre la surface plane de culasse et la ligne de la gaine du cône et du tronc de cône soit compris entre 40° et 50°,
un allumage linéaire étant réalisé dans le sens longitudinal par rapport à l'axe de la chambre de combustion (7), de telle sorte que les parties d'impulsion radiales sont alignées dans leur totalité, au moyen de la cavité, dans la direction longitudinale de la chambre de l'axe de combustion.

10. Procédé selon la revendication 9, **caractérisé en ce qu**'une chambre de combustion est utilisée selon l'une des revendications 1 à 8.

11. Moteur à combustion interne, **caractérisé par** une chambre de combustion selon l'une des revendications 1 à 8.
